# EUROPÄISCHE PATENTANMELDUNG

(11) **EP 1 316 536 A2**
(43) Veröffentlichungstag der Anmeldung: **04.06.2003**
(21) Anmeldenummer: 02025960.2
(22) Anmeldetag: 21.11.2002
(51) Int. Cl.: C04B 7/60, F27B 7/38, B01D 53/70

(54) **Verfahren zur Emissionsminderung der Abgasschadstoffe Dioxine und/oder Furane bei einer Zementklinkerproduktionslinie**

(30) Priorität: 30.11.2001 DE 10158968
(71) Anmelder: KHD Humboldt Wedag AG, 51105 Köln (DE)
(72) Erfinder: Eckert, Carsten, 51061 Köln (DE); Mathai, Robert, Dr., 51107 Köln (DE); Hand, Andreas, 50733 Köln (DE)

(57) **Zusammenfassung**

Um für Zementklinkerproduktionslinien, bei denen insbesondere Chlorverbindungen enthaltende Rohmaterialien und/oder Brennstoffe/Sekundärbrennstoffe sowie ein Teilgasabzug mit elektrostatischem Staubabscheider als Abgasentstauber zum Einsatz kommen, ein vergleichsweise einfaches und kostgengünstiges Verfahren zu schaffen, mit dem die Gefahr der Emission der Abgasschadstoffe Dioxine und/oder Furane nicht mehr gegeben ist, wird erfindungsgemäße vorgeschlagen, die abgezogene Menge des Teilgasabzugstromes (31) nach seiner Kühlung und elektrostatischen Entstaubung geringer zu halten als die Summe aus der durch den Drehrohrofen (18) gezogenen Sekundärluftmenge und der am Drehrohrofen vorbeigezogenen Tertiärluftmenge (32), und diesen abgekühlten und entstaubten Teilgasabzugsstrom (31) ausschließlich in den Bereich des Klinkerkühlers (19) zu rezirkulieren, aus welchem dem Klinkerkühler die Rekuperationsluftmenge entnommen wird, und die Dioxine und/oder Furane des Teilgasabzugstromes (31) im Klinkerkühler am heißen Zementklinker zu zersetzen und/oder anzulagern und/oder durch die Hochtemperaturbehandlung in den Brennstellen des Drehrohrofens bzw. Vorcalcinators zu zersetzen.

## Beschreibung

Die Erfindung betrifft ein Verfahren zur Emissionsminderung der Abgasschadstoffe Dioxine und/oder Furane, die insbesondere in einem heißen Teilgasabzugsstrom enthalten sind, mit dem ein entsprechend schadstoffhaltiger Teilstrom des Drehofenabgases einer Anlage zur Herstellung von Zementklinker abgezogen, in einer Mischkammer abgekühlt und in einem elektrostatischen Staubabscheider entstaubt wird, und der Zementklinker aus dem Drehrohrofen in einem nachgeschalteten Kühler gekühlt wird und ein Abluftstrom (Tertiärluftstrom) des Klinkerkühlers getrennt oder gemeinsam mit dem Drehofenabgasstrom zur Vorcalcinierung des Zementrohmehls genutzt wird.

In der Zementtechnologie ist es bekannt, dass viele Einsatzstoffe zur Zementklinkerherstellung Nebenbestandteile wie z. B. Alkaliverbindungen, Schwefel, Chlor, Schwermetalle etc. enthalten, die im Bereich der Sinterzone zum Teil verdampfen, im Vorwärmerbereich wieder kondensieren und somit Kreisläufe aufbauen, wodurch sowohl die Qualität des Zementklinkers ungünstig beeinflusst als auch der Brennprozess selbst erheblich gestört werden können. Zur Unterbindung beispielsweise eines Alkalichloridkreislaufs in einer Zementklinker-Brennanlage sowie zur Reduzierung des Alkalichloridgehalts im Zementklinker ist es bekannt, durch einen sogenannten Teilgasabzug einen Teil der schadstoffhaltigen Drehofenabgase am unteren Bereich des Abgassteigrohres zwischen Drehrohrofen und Zyklonschwebegas-Wärmetauschersystem abzuzweigen und abzuführen, und zwar bei einem Temperaturniveau, bei welchem die flüchtigen Schadstoffe noch nicht oder nur teilweise kondensiert sind. Ist dabei der abgezogene Teilgasstrom hoch alkalichloridhaltig, wird der Teilgasstrom nach seiner Abkühlung in einem eigenen elektrostatischen Staubabscheider entstaubt. Sind dabei die Alkalichloride nicht vollständig kondensiert und enthält der Teilgasabzugsstrom noch unzulässige hohe Mengen an gasförmigen/dampfförmigen Schadstoffen, müsste der Teilgasabzugsstrom verworfen und in einer eigenen Abgasreinigungsanlage gereinigt werden (Aufsatz "Probleme der Elektroentstaubung hochalkalichloridhaltiger Abgase aus Teilgasabzügen bei Wärmetauscher-Trockendrehöfen" in Fachzeitschrift Zement-Kalk-Gips Nr. 5/1978, Seiten 236 bis 238).

Aber nicht nur die Bildung von Alkalichloriden, sondern auch die Bildung von Dioxinen und/oder Furanen stellt bei der Zementklinkerherstellung ein zunehmendes Problem dar. Die Entstehung der letztgenannten Abgasschadstoffe beim Zementklinkerherstellungsprozess ist auf drei Wegen denkbar:

Rohmaterialbedingt. Aufgrund des im Kalkstein vorhandenen organisch gebundenen Kohlenstoffs und der Chloride ist eine Dioxinbildung in den oberen Stufen des Zyklonschwebegas-Wärmetauschersystems des Rohmehlvorwärmers möglich. Sofern die gebildeten Dioxine nicht partikelgebunden vorliegen und somit nicht in den Zementklinker eingebunden werden, können diese mit dem Abgas ins Freie gelangen. Maßnahmen hiergegen sind nur bedingt möglich, da ein gewisses Maß an TOC (total organical carbon) im Zementrohmehl natürlich vorhanden und daher nicht zu vermeiden ist.

Brennstoffbedingt. Bei der Verbrennung chlorierter d. h. Chlorverbindungen enthaltender Brennstoffe, z. B. Sekundärbrennstoffe bzw. Abfallbrennstoffe, in der Feuerung des Drehrohrofens ist aufgrund der hohen Verbrennungstemperaturen zwar nicht mit einer Dioxinbildung zu rechnen. Jedoch ist die Wahrscheinlichkeit der Dioxinbildung bei der Verbrennung chlorierter Brennstoffe in der Zweitfeuerung, d. h. in dem dem Drehrohrofen materialflussseitig gesehen vorgeschalteten Vorcalcinator erhöht, weil dort das Temperaturniveau der Brennstoffverbrennung niedriger liegt, und zwar oft nicht höher als ca. 850° C.

Die dritte Möglichkeit der Dioxinbildung wird durch spezielle Entstaubungseinrichtungen insbesondere der Bypassgase bzw. Teilgasabzugsströme bei Zementklinkerproduktionslinien hervorgerufen, und zwar durch elektrostatische Staubabscheider (E-Filter). In solchen E-Filtern kann es aufgrund der hohen elektrischen Spannung zu Überschlägen kommen. Es wurde die Erkenntnis gewonnen, dass hierdurch in Verbindung mit den vorherrschenden Temperaturen und dem hohen Chloridangebot die Dioxinbildung begünstigt wird. Diese Quelle der Dioxinbildung könnte dadurch umgangen werden, dass bei Neubauten bzw. Umbauten von Zementklinkerproduktionslinien als Entstaubungseinrichtungen bevorzugt Gewebefilter eingesetzt werden würden. Jedoch gibt es viele Fälle, in denen auf den Betrieb der wirkungsvoll arbeitenden elektrostatischen Staubabscheider nicht verzichtet werden soll.

In der EP-B-0 534 225 ist vorgeschlagen worden, ein mit den Schadstoffen SO₂ und NOₓ beladenes Bypassgas bzw. einen entsprechenden Teilgasabzugsstrom nach seiner Abkühlung und Entstaubung in den Klinkerkühler und über die Sekundärluft in den Drehrohrofen zu rezirkulieren, um das SO₂ im Rohmehlvorwärmer an den Kalkkomponenten des Zementrohmehls zu binden und das NOₓ in der De-NOₓ-Reduktionszone der Drehofenabgassteigleitung des Vorcalcinators zu reduzieren. In dieser Veröffentlichung ist aber eine Emissionsminderung der Abgasschadstoffe Dioxine und/oder Furane, wie sie unter bestimmten Voraussetzungen bei Zementklinkerproduktionslinien auftreten können, nicht angesprochen.

Der Erfindung liegt die Aufgabe zugrunde, für Zementklinkerproduktionslinien, bei denen insbesondere chlorierte Rohmaterialien und/oder chlorierte Brennstoffe/Sekundärbrennstoffe sowie ein Teilgasabzug mit elektrostatischem Staubabscheider als Abgasentstauber zum Einsatz kommen, ein vergleichsweise einfaches und kostengünstiges Verfahren zu schaffen, mit dem die Gefahr der Emission der Abgasschadstoffe Dioxine und/oder Furane nicht mehr gegeben ist.

Diese Aufgabe wird gemäß der Erfindung mit einem Verfahren mit den Maßnahmen des Anspruchs 1 gelöst. Vorteilhafte Ausgestaltungen der Erfindung sind in den Unteransprüchen angegeben.

Der Teilgasabzugsstrom einer Zementklinkerproduktionslinie kann insbesondere dann, wenn Chlorverbindungen enthaltende Rohstoffe und/oder Brennstoffe eingesetzt werden und die Entstaubung des Teilgasabzugsstromes in einem elektrostatischen Staubabscheider (E-Filter) erfolgt, unzulässig hohe Werte der Abgasschadstoffe Dioxine und/oder Furane enthalten. Zur Vermeidung derartiger Schadstoffemissionen wird der Teilgasabzugsstrom nicht in einer separaten Gasreinigungsanlage gereinigt, sondern gemäß der Erfindung wird der Teilgasstrom nach seiner Kühlung und elektrostatischen Entstaubung in einer solchen Menge abgezogen, die geringer ist als die Summe aus der durch den Drehrohrofen gezogenen Sekundärluftmenge und der am Drehrohrofen vorbeigezogenen Tertiärluftmenge. Diese abgekühlte und entstaubte Menge des Teilgasabzugsstromes wird gemäß der Erfindung ausschließlich in den Bereich des Klinkerkühlers rezirkuliert, aus welchem dem Klinkerkühler die Rekuperationsluftmenge entnommen wird. Der rezirkulierte Teilgasabzugsstrom dient in der Rekuperationszone des Klinkerkühlers zunächst als Kühlgas, bevor dieses in den Drehrohrofen als Sekundärluft und ggf. noch in die Tertiärluftleitung als Tertiärluft einströmt. Dabei erfolgt die Reinigung des Teilgasabzugsstromes erfindungsgemäß in der Weise, dass die Dioxine und/oder Furane beim Kontakt mit dem heißen Zementklinker zerstört und/oder adsorptiv angelagert und/oder durch die Hochtemperaturbehandlung insbesondere im Drehrohrofen zersetzt werden, so dass derartige Schadstoffe nicht ins Freie gelangen. Der sich an die Rekuperationszone des Klinkerkühlers anschließende Kühlerabschnitt wird durch Einblasung von Frischluft gekühlt, so dass die von diesem Kühlerabschnitt abgezogene Kühlerabluft schadstofffrei ist.

Das erfindungsgemäße Verfahren ist nicht nur zur Reinigung der Bypassabgase einer Zementklinkerproduktionslinie geeignet, sondern auch zur Reinigung eines fremden mit Dioxinen und/oder Furanen belasteten Abgasstromes, dessen Menge geringer ist als die Rekuperationsluftmenge des jeweiligen Klinkerkühlers, die ca. 0,80 bis 1,0 Nm³/kg Klinker beträgt.

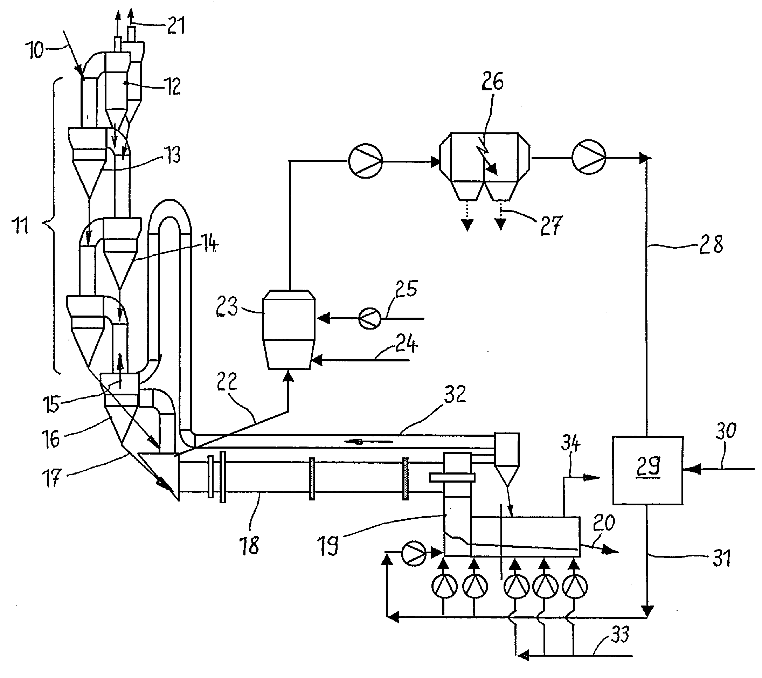

Die Erfindung und deren weitere Merkmale und Vorteile werden anhand des in der Zeichnung schematisch dargestellten Ausführungsbeispieles näher erläutert.

Die Zeichnung zeigt in schematischer Darstellung eine zur Durchführung des erfindungsgemäßen Verfahrens geeignete Anlage zur Herstellung von Zementklinker aus Zementrohmehl 10, das in die Vorwärmstufe 11 oben aufgegeben wird, wo es nacheinander die Zyklonschwebegas-Wärmetauscher 12, 13, 14 im kombinierten Gleich/-Gegenstrom zum heißen Abgas 15 einer Vorcalcinationsstufe durchwandert, um im untersten Zyklon 16 vom heißen Abgasstrom 15 abgetrennt und als hochgradig (z. B. 95 %) calciniertes Zementrohmehl 17 in die Einlaufkammer des Drehrohrofens 18 eingeführt zu werden, in dessen Sinterzone es zu Zementklinker gebrannt wird, der anschließend in einem Klinkerkühler 19, z. B. Rostkühler abgekühlt wird. Der abgekühlte Zementklinker verlässt den Kühler 19 bei 20.

Das am Zementrohmehl abgekühlte Abgas verlässt die Vorwärmstufe 11 der Anlage bei 21. Der Gehalt an Dioxinen und/oder Furanen in diesem Abgasstrom 21 liegt unterhalb der Nachweisgrenze. Anders kann der Fall beim Teilgasabzugsstrom 22 liegen, mit dem z. B. ca. 10 % der Drehofenabgasmenge aus der Einlaufkammer des Drehrohrofens 18 als heißer schadstoffhaltiger Teilgasstrom abgezogen wird, der insbesondere beim Einsatz Chlorverbindungen enthaltender Rohstoffe und/oder Brennstoffe Dioxine und/oder Furane enthalten kann. Der z. B. 1200° C heiße Teilgasabzugsstrom 22 wird zunächst in einer Bypass-Mischkammer 23 durch Eindüsung von Wasser 24 und Einführung von Frischluft 25 auf z. B. 300° C abgekühlt und in einem elektrostatischen Staubabscheider 26 entstaubt, der die Dioxinbildung begünstigen kann. Aus dem E-Filter 26 werden einerseits der schadstoffhaltige Staub 27 und andererseits der entstaubte Teilgasabzugsstrom 28 abgezogen, welch letzterer in einer zusätzlichen Mischkammer 29 durch Zumischung von weiterer Frischluft 30 von z. B. 300° C auf z. B. 100° C abgekühlt werden kann, um die thermische Belastung der vorderen Klinkerkühler-Ventilatoren zu verringern. Jedenfalls wird das abgekühlte, die Schadstoffe Dioxine und/oder Furane enthaltende Mischgas 31 in einer solchen Menge in den Rekuperationsbereich des Klinkerkühlers 19 rezirkuliert, die geringer ist als die Summe aus der durch den Drehrohrofen 18 gezogenen Sekundärluftmenge und der am Drehrohrofen durch die Tertiärluftleitung 32 vorbeigezogenen Tertiärluftmenge.

Das heißt, der abgekühlte und entstaubte Teilgasabzugstrom 31 wird den Ventilatoren des Rekuperationsbereiches (linken Bereiches) des Klinkerkühlers 19 zugeführt, während die Ventilatoren des daran anschließenden Bereiches (rechten Bereiches) des Klinkerkühlers mit Frischluft 33 als Kühlluft für den Klinkerkühler beschickt werden. Aus dem letztgenannten Klinkerkühlerabschnitt wird Kühlerabluft 34 abgezogen, die schadstofffrei ist, aber in der Zementklinkerproduktionslinie selbst nicht mehr verwertbar ist.

Als Zahlenbeispiel wird angegeben, dass das Mengenverhältnis beim Kühlgas für den Klinkerkühler 19 z. B. ca. 25 % rezirkulierter Teilgasabzugsstrom 31 und z. B. ca. 75 % Frischluft 33 betragen kann.

Jedenfalls werden die Dioxine und/oder Furane des rezirkulierten Teilgasabzugstroms 31 am heißen Zementklinker des Klinkerkühlers 19 zersetzt und/oder adsorptiv angelagert und/oder durch die anschließende Hochtemperaturbehandlung im Bereich der Brennstelle des Drehrohrofens 18 sowie ggf. auch im Bereich der Brennstelle des dem Drehrohrofen vorgeschalteten Vorcalcinators zersetzt und unschädlich gemacht.

Wird mit dem erfindungsgemäßen Verfahren Zementklinker hergestellt, ist trotz Einsatzes von Chlorverbindungen enthaltenden Rohstoffen und/oder Chlorverbindungen enthaltenden Sekundärbrennstoffen/Abfallbrennstoffen und trotz Einsatzes eines sich durch einen hohen Wirkungsgrad auszeichnenden elektrostatischen Staubabscheiders zwecks Entstaubung des Bypassabzugstromes erfindungsgemäß gesichert, dass die Schadstoffe Dioxine und/oder Furane nicht nach außen ins Freie emittiert werden. Gleichzeitig wird der Wärmeinhalt des Bypassmischgases 31 bei der Zementklinkerherstellung verwertet. Infolge des rezirkulierten Bypassmischgasstromes 31 wird die Temperatur der Sekundärluft und der Tertiärluft angehoben, was eine Absenkung des Brennstoffbedarfs in den Brennstellen des Drehrohrofens sowie des Vorcalcinators zur Folge hat.

## Patentansprüche

1. Verfahren zur Emissionsminderung der Abgasschadstoffe Dioxine und/oder Furane, die insbesondere in einem heißen Teilgasabzugsstrom enthalten sind, mit dem ein entsprechend schadstoffhaltiger Teilstrom (22) des Drehofenabgases einer Anlage zur Herstellung von Zementlinker abgezogen, in einer Mischkammer (23) abgekühlt und in einem elektrostatischen Staubabscheider (26) entstaubt wird, und der Zementklinker aus dem Drehrohrofen (18) in einem nachgeschalteten Kühler (19) gekühlt wird und ein Abluftstrom (32) (Tertiärluftstrom) des Klinkerkühlers getrennt oder gemeinsam mit dem Drehofenabgasstrom zur Vorcalcinierung des Zementrohmehls genutzt wird,
**gekennzeichnet durch** folgende Merkmale:
a) die abgezogene Menge des Teilgasstromes (31) nach seiner Kühlung und elektrostatischen Entstaubung ist geringer als die Summe aus der **durch** den Drehrohrofen (18) gezogenen Sekundärluftmenge und der am Drehrohrofen vorbeigezogenen Tertiärluftmenge (32),
b) der abgekühlte und entstaubte Teilgasabzugstrom (31) wird ausschließlich in den Bereich des Klinkerkühlers (19) rezirkuliert, aus welchem dem Klinkerkühler die Rekuperationsluftmenge entnomen wird,
c) die Dioxine und/oder Furane werden im Klinkerkühler (19) am Zementlinker zersetzt und/oder angelagert und/oder **durch** die Hochtemperaturbehandlung im Drehrohrofen zersetzt.

2. Verfahren nach Anspruch 1,
**dadurch gekennzeichnet, dass** der Teilgasabzugsstrom (31) in den ersten dem Klinkerauswurfende des Drehrohrofens (18) benachbarten Abschnitt des Klinkerkühlers (19) rezirkuliert wird, dessen Abluft als Sekundärluft in den Drehrohrofen und/oder als Tertiärluft (32) in den Vorcalcinator einströmt.

3. Verfahren nach den Ansprüchen 1 oder 2,
**dadurch gekennzeichnet, dass** dem vom elektrostatischen Staubabscheider (26) abgezogenen Teilgasabzugstrom (28) in einer weiteren Mischkammer (29) Frischluft (30) zugemischt wird, und dass das Mischgas (31) vollständig auf alle Ventilatoren des Rekuperationsbereiches des Klinkerkühlers (19) verteilt wird.
